# FASCICULE DE BREVET EUROPEEN

(11) **EP 2 491 437 B1**
(45) Date de publication et mention de la délivrance du brevet: **02.08.2017**
(21) Numéro de dépôt: 10785126.3
(22) Date de dépôt: 15.10.2010
(51) Int. Cl.: G02B 1/10, G02C 7/04, B41M 5/382, B41M 5/26, G02B 5/22, B41M 3/00, C08J 7/06

(54) **PROCÉDÉ DE COLORATION SÉLECTIVE, COMPOSANT TRANSPARENT A STRUCTURE CELLULAIRE RESULTANT D'UN TEL PROCEDE**
SELEKTIVES FÄRBEVERFAHREN, TRANSPARENTE KOMPONENTE MIT ZELLSTRUKTUR RESULTIEREND AUS DIESEM VERFAHREN
SELECTIVE DYEING METHOD, TRANSPARENT OPTICAL COMPONENT HAVING A CELLULAR STRUCTURE RESULTING FROM SUCH METHOD

(30) Priorité: 21.10.2009 FR 0957390
(43) Date de publication de la demande: 29.08.2012
(73) Titulaire: Essilor International (Compagnie Générale d'Optique), 94220 Charenton-le-Pont (FR)
(72) Inventeur: ARCHAMBEAU, Samuel, F-94220 Charenton-le-Pont (FR); BALLET, Jérôme, F-94220 Charenton-le-Pont (FR); CANO, Jean-Paul, F-94220 Charenton-le-Pont (FR); PERROT, Stéphane, F-94220 Charenton-le-Pont (FR)
(74) Mandataire: Cabinet Plasseraud
(86) Numéro de dépôt international: PCT/FR2010/052200
(87) Numéro de publication internationale: WO 2011/048310

(56) Documents cités:
- EP-A1- 0 003 191
- EP-A1- 1 683 645
- FR-A1- 2 888 948
- FR-A1- 2 907 922
- FR-A1- 2 918 463

## Description

La présente invention concerne un procédé de coloration sélective d'un substrat. Elle concerne aussi un composant cellulaire transparent tel que résultant d'un tel procédé.

Il est souvent nécessaire de colorer un substrat, sélectivement dans une première portion de surface de ce substrat par rapport à une seconde portion de la surface du même substrat. Pour cela, il est possible de masquer la seconde portion, d'appliquer le colorant sur tout le substrat puis de retirer le masque utilisé. Mais un tel procédé n'est pas possible lorsque le substrat présente en surface une structure complexe et/ou à motifs de très petites dimensions, qui empêche d'appliquer le masque. En outre, les étapes d'application du masque sur le substrat et de retrait du masque peuvent être longues par elles-mêmes, et incompatibles avec le prix de revient qui est visé pour un produit qui incorpore le substrat coloré. Les documents FR 2 918 463, FR 2 907 922, FR 2 888 948 et EP 0 003 191 décrivent l'arrière plan technologique connu de l'homme du métier. Le document EP 1 683 645 décrit un procédé de coloration selon les étapes /1/ à /5/, cependant le substrat présente une surface constituée d'un seul et unique matériau. Un but de la présente invention consiste à colorer un substrat de façon sélective entre des portions différentes de la surface de ce substrat, d'une façon qui soit compatible avec une structure de surface complexe et/ou à motifs de petites dimensions.

Un autre but de la présente invention consiste à colorer sélectivement une portion de la surface d'un substrat, d'une façon rapide et économique.

Pour atteindre ces buts et d'autres, la présente invention propose un procédé de coloration sélective qui comprend les étapes suivantes :
/1/ fournir un substrat qui possède une surface découverte, cette surface découverte comprenant une première portion de surface qui est constituée d'un premier matériau et une seconde portion de surface qui est constituée d'un second matériau différent du premier matériau ;
/2/ fournir une source de colorants qui est adaptée pour libérer les colorants lorsque la source est chauffée ;
/3/ chauffer la source de colorants à proximité de la surface découverte du substrat, de sorte que des colorants soient transférés à partir de la source de colorants sur la surface découverte du substrat ;
/4/ chauffer le substrat de sorte que des colorants qui ont été transférés sur la première portion de surface pénètrent à l'intérieur du premier matériau ; et
/5/ rincer la surface découverte du substrat avec un solvant des colorants, de façon à éliminer des colorants restés sur la surface découverte.

Pour la mise en oeuvre des étapes de ce procédé, le second matériau est sélectionné pour que des colorants qui proviennent de la source de colorants et qui sont présents sur la seconde portion de surface au début de l'étape /4/ ne pénètrent pas à l'intérieur du second matériau pendant cette étape /4/, et soient éliminés à l'étape /5/.

Ainsi, selon l'invention, la sélectivité de la coloration est obtenue en choisissant de façon adéquate les matériaux du substrat qui constituent respectivement la portion de surface à colorer et la portion de surface qui ne doit pas être colorée. Pour cela, le premier matériau qui est utilisé pour la portion de surface à colorer, dite première portion de surface, est perméable aux colorants lorsque ce premier matériau est chauffé. Simultanément, le second matériau qui est utilisé pour la portion de surface qui ne doit pas être colorée, dite seconde portion de surface, est imperméable aux mêmes colorants. Ainsi, les colorants diffusent uniquement dans le premier matériau lorsque le substrat est chauffé, sans pénétrer dans le second matériau. Les colorants qui restent en surface du substrat, au moins sur la seconde portion de surface, sont éliminés par rinçage de sorte que ne restent dans le substrat que les colorants qui ont pénétré dans le premier matériau.

Un tel procédé ne nécessite pas d'utiliser un masque pour différencier les première et seconde portions de la surface du substrat qui est découverte.

En outre, ses différentes étapes, notamment le chauffage et le rinçage du substrat, sont compatibles avec une structure complexe et/ou à motifs de petites dimensions pour la surface de ce substrat.

De préférence, le second matériau peut posséder une température de gel ou de ramollissement qui est supérieure à celle du premier matériau. En effet, une corrélation empirique a été observée par les inventeurs, entre la perméabilité d'un matériau à des colorants et son ramollissement lorsqu'il est chauffé. En ce sens, le second matériau est dit imperméable aux colorants, en comparaison avec le premier matériau.

Préférentiellement, le premier matériau peut être de nature organique ou hybride organo-minérale. Dans le cadre de la présente invention, on entend par matériau organo-minéral un matériau qui comprend au moins deux composantes, dont l'une est de nature organique et l'autre est de nature minérale. Un tel matériau organo-minéral peut être composé de grains minéraux, par exemple de grains d'au moins un oxyde de métal qui sont répartis dans une matrice organique, celle-ci assurant alors la cohésion du matériau. Dans ce cas, le ramollissement du premier matériau correspond au ramollissement de sa matrice organique. Les grains peuvent être des grains de silice (SiO₂), notamment.

Le second matériau peut être de nature minérale ou hybride organo-minérale. En effet, d'une façon générale, les colorants ne diffusent pas ou peu à l'intérieur d'un matériau minéral, ou tout au moins ils diffusent moins rapidement dans un tel matériau minéral que dans un matériau organique. Par exemple, le second matériau peut comprendre de la silice (SiO₂), de l'oxyde de zinc (ZnO), un oxyde d'indium dopé à l'étain (ITO). Ce peut être aussi un matériau hybride organo-minéral qui incorpore de la silice, de l'oxyde de zinc ou un oxyde d'indium dopé à l'étain.

Lorsqu'à la fois le premier et le second matériaux sont hybrides avec des grains minéraux répartis dans des matrices organiques respectives, la matrice du second matériau a de préférence une température de gel ou de ramollissement qui est supérieure à celle de la matrice du premier matériau.

D'une façon générale, la source de colorants peut être adaptée pour libérer les colorants à l'étape /3/ par sublimation de ceux-ci, et que ces colorants soient sous forme gazeuse lors de leur transfert entre la source et la surface découverte du substrat. Alternativement, la source des colorants peut être adaptée pour que les colorants soient transférés lors d'un contact entre cette source et la surface découverte du substrat, qui est réalisé pendant l'étape /3/. La source des colorants est alors retirée entre les étapes /3/ et /4/. En effet, ces différents types de sources de colorants sont particulièrement compatibles avec une surface découverte du substrat qui est complexe et/ou présente des motifs de petites dimensions. En particulier, elles ne nécessitent pas d'utiliser un applicateur des colorants qui devrait se conformer aux motifs de la surface découverte du substrat pour y déposer des molécules de ces colorants. Par exemple, la source des colorants peut comprendre une portion de papier ou d'alcool polyvinylique, qui est imprégnée par les colorants.

Dans un mode préféré de mise en oeuvre de l'invention, le substrat peut comporter :
- un substrat de base qui est transparent avec une surface supérieure ;
- une couche transparente du second matériau qui est portée par la surface supérieure du substrat de base ; et
- un réseau de parois qui est disposé sur la couche transparente du second matériau, d'un côté de celle-ci opposé au substrat de base, avec les parois qui s'étendent perpendiculairement à la surface supérieure du substrat de base.

La première portion de surface découverte est alors constituée par les parois, et la seconde portion de surface découverte est constituée par la couche transparente du second matériau entre les parois. Dans ce cas, le procédé permet de conserver la transparence du substrat entre les parois. En outre, le substrat de base peut être en un matériau quelconque, puisque l'imperméabilité du substrat vis-à-vis des colorants, entre les parois, est assurée par la couche transparente. Un choix adéquat du matériau de cette couche procure donc une protection du substrat de base par rapport à la pénétration ou la diffusion des colorants.

En particulier, les parois peuvent être en résine, notamment en résine lithographique. Dans ce cas, le substrat peut être chauffé à l'étape /4/ pendant au moins une heure à une température qui est comprise entre 110° et 150°C.

La résine des parois peut donc être organique ou organo-minérale.

Le substrat de base peut être en polyéthylène téréphtalate (PET).

La couche transparente peut être constituée de l'un des seconds matériaux qui ont été cités plus haut. Elle peut posséder une épaisseur qui est comprise entre 50 et 1000 nm (nanomètre), de préférence entre 100 et 500 nm, mesurée perpendiculairement à la surface supérieure du substrat de base. Une telle épaisseur est efficace pour empêcher un contact entre les colorants et le substrat de base.

L'invention propose aussi un composant cellulaire transparent qui permet une vision distincte à travers ce composant, et qui peut être obtenu selon un procédé tel que décrit précédemment. Un tel composant peut comprendre le substrat de base, la couche transparente et le réseau de parois. Il est caractérisé en ce que les parois incorporent des colorants, avec une répartition de ceux-ci à l'intérieur des parois qui correspond à un profil de diffusion à partir d'une surface des parois, et en ce que la couche transparente est dépourvue de colorants. Un tel composant peut former une partie au moins d'un verre de lunettes, d'un verre de masque, d'une lentille optique, d'une visière de casque, d'un hublot d'avion ou d'un vitrage, ou former une partie au moins d'une structure multicouche qui est adaptée pour être appliquée sur un verre de lunettes, un verre de masque, une lentille optique, une visière de casque, un hublot d'avion ou un vitrage.

D'autres particularités et avantages de la présente invention apparaîtront dans la description ci-après d'un exemple de mise en oeuvre non limitatif, en référence aux dessins annexés, dans lesquels :
- la figure 1 est une vue en coupe d'un substrat auquel un procédé selon l'invention peut être appliqué ;
- les figures 2a-2c sont des vues en coupe grossies du substrat de la figure 1, à plusieurs étapes d'un procédé selon l'invention ; et
- la figure 3 illustre une application particulière du substrat des figures précédentes.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques.

L'invention est maintenant décrite à titre illustratif dans le cadre d'une application ophtalmique, mais il est entendu qu'elle peut être appliquée à d'autres domaines techniques.

L'invention est particulièrement adaptée pour colorer un composant formant substrat, lorsque ce composant est initialement transparent et doit rester transparent après avoir été coloré. Dans le cadre de la présente invention, on entend par composant transparent un composant optique qui permet à un utilisateur qui est situé d'un côté du composant de voir distinctement, à travers ce composant, des objets qui sont situés d'un autre côté de et à distance du composant. Autrement dit, une image d'un objet est formée sur la rétine de l'utilisateur, par de la lumière qui se propage sur une première distance non-nulle entre l'objet et le composant transparent, puis traverse le composant transparent et se propage sur une seconde distance non-nulle entre le composant transparent et un oeil de l'utilisateur. Pour cela, une diffusion et/ou une diffraction lumineuse(s) que provoquerait le composant optique doit (doivent) être suffisamment faible(s), de sorte que l'image d'un point d'objet à travers le composant transparent soit un point d'image et non une tache diffuse dans l'image qui est perçue par l'utilisateur.

Par exemple, le composant transparent auquel l'invention est appliquée peut être un verre de lunettes, ou une structure multicouche qui est destinée à être appliquée sur un tel verre de lunettes.

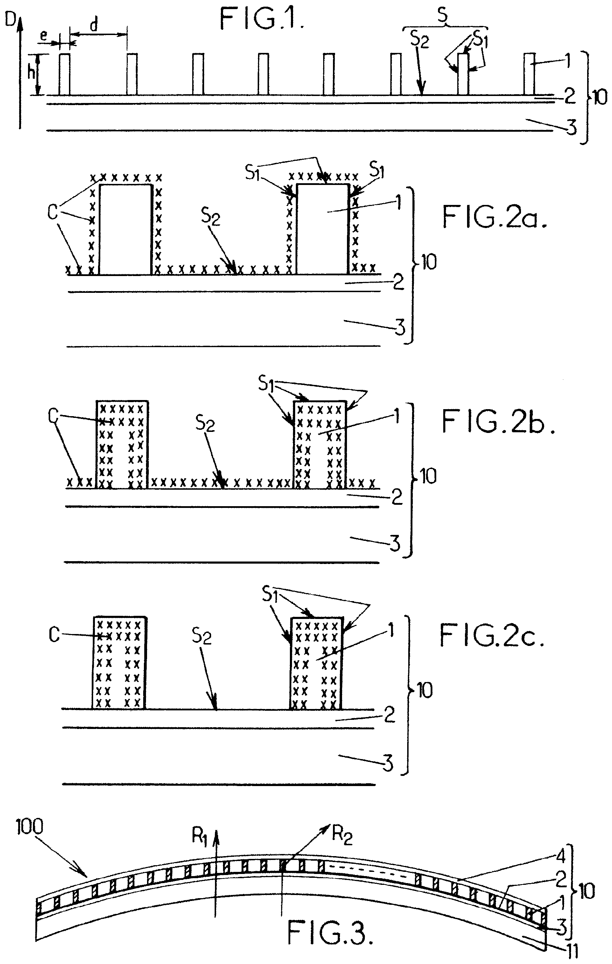

Conformément à la figure 1, une telle structure multicouche 10 peut comprendre :
- un film transparent 3 de polyéthylène téréphtalate (PET), de polycarbonate (PC) ou de polyimide, avec une épaisseur de 50 µm (micromètre) par exemple, et qui forme un substrat de base de la structure 10 ;
- une couche 2 qui recouvre une surface supérieure du film 3 ; et
- un réseau de parois 1 qui est formé sur la couche 2, avec les parois 1 qui s'étendent sensiblement perpendiculairement au film 3.

La couche 2 est de préférence continue et peut être formée sur le film 3 par un procédé de dépôt de couche mince, tel que le dépôt par plasma à basse pression ou le dépôt par plasma assisté RF pour un oxyde. Un procédé de type sol-gel peut être utilisé alternativement lorsque la couche 2 est constituée d'un matériau hybride. La couche 2 peut être en silice (SiO₂) par exemple, avec une épaisseur suffisante pour être continue. L'épaisseur de la couche 2 peut être comprise entre 0,1 et 0,5 µm.

Les parois 1 peuvent être au moins en partie en un matériau organique, tel qu'une résine, notamment une résine lithographique, avec chacune une hauteur h de 20 µm et une épaisseur e qui est supérieure à 0,1 µm, de préférence comprise entre 0,5 et 8 µm. Deux parois 1 qui sont voisines peuvent être séparées par une distance d qui est comprise entre 50 µm et 1,5 mm par exemple, parallèlement au film 3. Des grains minéraux, tels que des grains d'un oxyde de métal, peuvent en outre être incorporés dans la résine des parois 1, de façon à être enrobés par celle-ci. Le matériau résultant qui constitue les parois 1 est alors de nature organo-minérale.

La structure 10 est transparente pour des rayons lumineux qui se propage selon la direction D perpendiculaire au film 3. En particulier, le film 3 et la couche 2 sont individuellement transparents.

La structure 10 possède alors une surface découverte S qui est composée pour partie par les parois 1 et pour partie par la couche 2, entre les parois 1. Les parois 1 forment donc une première portion de la surface S, notée S₁, et la couche 2, pour les parties de celle-ci qui sont découvertes entre les parois 1, forme une seconde portion de la surface S, notée S₂. Le matériau des parois 1 constitue le premier matériau ainsi désigné dans la partie générale de la présente demande de brevet, et le matériau de la couche 2 constitue le second matériau.

Une source de colorants (non représentée) est amenée à proximité de la surface découverte S. Cette source de colorants est adaptée pour libérer des molécules C d'au moins un colorant lorsqu'elle est chauffée. De telles sources de colorants, dites par sublimation, sont bien connues de l'Homme du métier si bien qu'il n'est pas nécessaire d'en répéter le fonctionnement ici. Par exemple, le colorant peut être contenu dans un creuset qui est disposé à proximité de la structure 10, ou peut être une poudre ou un liquide qui est appliqué sur la surface S. De façon générale, l'invention peut être appliquée à un mélange de plusieurs colorants. Dans ce cas, chaque colorant peut être transféré sur la structure 10 de la façon décrite, individuellement à partir d'une source séparée ou à partir d'une source du mélange. Pour raison de clarté, on supposera dans la suite qu'un colorant unique est utilisé.

La source de colorant est chauffée de façon que des molécules du colorant C soient libérées et se déposent sur la surface découverte S de la structure 10. La température et la durée du chauffage de la source du colorant sont choisies pour qu'une quantité suffisante de molécules du colorant C recouvrent la surface S de façon sensiblement continue et uniforme, notamment sur les flancs des parois 1 qui sont perpendiculaires au film 3. Conformément à la figure 2a, des molécules du colorant C sont ainsi déposées à la fois sur la première portion S₁ et sur la seconde portion S₂ de la surface S. Par contre, le film 3 n'est pas en contact avec des molécules de colorant C, puisqu'il est recouvert par la couche 2 entre les parois 1.

La source de colorant C est retirée puis la structure 10 est elle-même chauffée, pour activer une diffusion des molécules du colorant C dans le matériau des parois 1. La température de la structure 10 chauffée peut être choisie pour ramollir la résine des parois 1. Toutefois, cette température de chauffage reste assez basse pour ne pas déformer les parois 1. Par exemple, la structure 10 peut être chauffée jusqu'à une température qui est comprise entre 110°C et 150°C. Les molécules de colorant C pénètrent alors à l'intérieur des parois 1, à partir de leurs flancs et de leurs sommets qui constituent la portion de surface S₁.

Le matériau des parois 1 a donc été choisi pour être perméable aux molécules de colorant C, afin de favoriser la diffusion de ces molécules dans les parois 1. Les parois 1 incorporent alors des molécules du colorant C avec une répartition qui possède un profil d'une diffusion produite à partir des flancs et des sommets de ces parois (figure 2b).

Le matériau de la couche 2 a été choisi pour être étanche, ou imperméable, aux molécules du colorant C. Ainsi, les molécules du colorant C qui sont présentes sur la seconde portion de surface S₂ restent à l'extérieur de la couche 2 pendant le chauffage de la structure 10, sans pénétrer dans la couche 2. En particulier, le matériau de la couche 2 peut être choisi pour ne pas être ramolli par le chauffage de la structure 10. Pour cela, il présente une température de ramollissement qui est supérieure à celle du matériau des parois 1. Ainsi, le film 3 reste sans contact avec des molécules du colorant C, bien que le matériau constitutif du film 3 puisse présenter une affinité quelconque vis-à-vis du colorant utilisé. En particulier, des molécules du colorant diffuseraient à l'intérieur du polyéthylène téréphtalate si le film 3 avait été en contact avec des molécules du colorant C. Autrement dit, la couche 2 constitue une barrière de protection efficace du film 3 vis-à-vis des molécules de colorant C.

Lors d'une dernière étape qui est illustrée par la figure 2c, la structure S est rincée avec un solvant des molécules du colorant C. De l'eau peut être utilisée pour ce rinçage, par exemple. Les molécules de colorant C qui sont restées sur la surface découverte S sont ainsi éliminées. De cette façon, toutes les molécules de colorant C qui sont présentes sur la seconde portion de surface S₂ sont retirées, de sorte que la structure 10 n'est pas colorée entre les parois 1. D'éventuelles molécules de colorant C qui seraient restées en excès sur la première portion de surface S₁ sont retirées simultanément. Par contre, celles des molécules de colorant C qui ont diffusé à l'intérieur du matériau des parois 1 ne sont pas en contact avec le solvant de rinçage, si bien qu'elles colorent les parois 1 de façon permanente. Ainsi, une coloration sélective des parois 1 a été réalisée, par rapport au film 3.

A l'issue du procédé de l'invention, la structure 10 est absorbante pour des rayons lumineux qui traversent les parois 1, et transparente entre les parois 1 avec un niveau élevé de transmission lumineuse dans la seconde portion de surface S₂. En particulier, la transmission lumineuse finale dans cette seconde portion de surface S₂ peut être sensiblement égale à la valeur initiale de transmission lumineuse du film 3 recouvert par la couche 2.

Dans une application particulière de la structure 10 colorée comme décrit précédemment, une substance optique transparente peut être introduite ensuite entre les parois 1, jusqu'aux sommets de ces parois. Puis un film de fermeture transparent 4 peut être appliqué sur la structure 10 comme représenté sur la figure 3, par exemple en étant fixé sur les sommets des parois 1. La structure 10 est ainsi fermée de façon étanche, et contient la substance optique transparente de façon permanente.

La structure 10 peut ensuite être appliquée sur un verre de lunettes 11, par exemple sur la face optique convexe de ce verre. L'assemblage permet de procurer au verre de lunettes final 100 des fonctions additionnelles qui sont produites par la substance transparente. Par exemple, cette substance peut être photochrome.

Le verre de lunettes 100 est encore transparent pour un rayon lumineux R₁ qui le traverse entre deux parois 1. En effet, le rayon R₁ traverse successivement le verre 11, le film 3, la couche 2, une portion de la substance optique qui est contenue entre deux parois 1, et le film de fermeture 4, qui sont tous transparents avec une valeur élevée de transmission lumineuse.

Par contre, un rayon lumineux R₂ qui traverse le verre 100 en passant dans l'une des parois 1 peut être dévié par diffusion lumineuse, à cause de l'épaisseur e de cette paroi, qui est petite. Il en résulterait une réduction de la transparence du verre 100 au sens qui a été rappelé au début de cette description, procurant une vision brouillée à un utilisateur de ce verre. Mais le matériau de la paroi 1 ayant été coloré, il est absorbant si bien que l'intensité lumineuse qui est associée au rayon diffusé R₂ est basse, voire très basse. Le rayon R₂ n'intervient donc pas dans l'image d'un objet qui est formée à travers le verre 100.

Grâce au procédé de coloration sélective selon l'invention, le verre de lunettes 100 est encore transparent, sans qu'une partie de la lumière qui est transmise à travers ce verre soit diffusée ni diffractée. Le niveau de voile du verre 100 peut ainsi être inférieur à 1%. Le verre 100 permet donc une vision distincte pour un utilisateur de ce verre.

## Revendications

1. Procédé de coloration sélective comprenant les étapes suivantes :
/1/ fournir un substrat (10) ayant une surface découverte (S), ladite surface découverte comprenant une première portion de surface (S₁) constituée d'un premier matériau et une seconde portion de surface (S₂) constituée d'un second matériau différent dudit premier matériau ;
/2/ fournir une source de colorants adaptée pour libérer les colorants (C) lorsque ladite source est chauffée ;
/3/ chauffer la source de colorants à proximité de la surface découverte (S) du substrat, de sorte que des colorants (C) soient transférés à partir de ladite source de colorants sur ladite surface découverte du substrat ;
/4/ chauffer le substrat (10) de sorte que des colorants (C) ayant été transférés sur la première portion de surface (S₁) pénètrent à l'intérieur du premier matériau ; et
/5/ rincer la surface découverte (S) du substrat avec un solvant des colorants, de façon à éliminer des colorants restés sur ladite surface découverte,
dans lequel le second matériau est sélectionné pour que des colorants provenant de la source de colorants et présents sur la seconde portion de surface (S₂) au début de l'étape /4/ ne pénètrent pas à l'intérieur dudit second matériau pendant ladite étape /4/, et soient éliminés à l'étape /5/.

2. Procédé selon la revendication 1, suivant lequel le second matériau possède une température de gel ou de ramollissement supérieure à une température de gel ou de ramollissement du premier matériau.

3. Procédé selon la revendication 1 ou 2, suivant lequel le premier matériau est de nature organique ou hybride organo-minérale, et le second matériau est de nature minérale ou hybride organo-minérale.

4. Procédé selon la revendication 3, suivant lequel le second matériau comprend de la silice, de l'oxyde de zinc, un oxyde d'indium dopé à l'étain, ou un matériau hybride incorporant de la silice, de l'oxyde de zinc ou un oxyde d'indium dopé à l'étain.

5. Procédé selon l'une quelconque des revendications 1 à 4, suivant lequel la source de colorants est adaptée pour libérer lesdits colorants à l'étape /3/ par sublimation des dits colorants, et que les dits colorants (C) soient sous forme gazeuse lors du transfert entre ladite source de colorants et la surface découverte (S) du substrat.

6. Procédé selon l'une quelconque des revendications 1 à 4, suivant lequel la source de colorants est adaptée pour que lesdits colorants (C) soient transférés lors d'un contact entre ladite source de colorants et la surface découverte (S) du substrat, réalisé pendant l'étape /3/, et suivant lequel la source de colorants est retirée entre les étapes /3/ et /4/.

7. Procédé selon l'une quelconque des revendications précédentes, suivant lequel la source de colorants comprend une portion de papier ou d'alcool polyvinylique, imprégnée par les colorants (C).

8. Procédé selon l'une quelconque des revendications précédentes, suivant lequel le substrat (10) comporte :
- un substrat de base transparent (3) ayant une surface supérieure ;
- une couche transparente (2) du second matériau portée par la surface supérieure du substrat de base ; et
- un réseau de parois (1) disposé sur la couche transparente du second matériau, d'un côté de ladite couche opposé au substrat de base, les parois s'étendant perpendiculairement à la surface supérieure du substrat de base,
la première portion de surface découverte (S₁) étant constituée par les parois (1), et la seconde portion de surface découverte (S₂) étant constituée par la couche transparente (2) du second matériau entre les parois.

9. Procédé selon la revendication 8, suivant lequel les parois (1) sont au moins en partie en résine, notamment en résine lithographique, et suivant lequel le substrat (10) est chauffé à l'étape /4/ pendant au moins une heure à une température comprise entre 110° et 150°C.

10. Procédé selon la revendication 8 ou 9, suivant lequel le substrat de base (3) est en polyéthylène téréphtalate.

11. Procédé selon l'une quelconque des revendications 8 à 10, suivant lequel la couche transparente (2) du second matériau possède une épaisseur comprise entre 50 et 1000 nm, de préférence comprise entre 100 et 500 nm, mesurée perpendiculairement à la surface supérieure du substrat de base (3).

12. Composant cellulaire transparent permettant une vision distincte à travers ledit composant et comprenant :
- un substrat de base transparent (3) ayant une surface supérieure ;
- une couche transparente (2) portée par la surface supérieure du substrat de base ; et
- un réseau de parois (1) disposé sur la couche transparente, d'un côté de ladite couche opposé au substrat de base, les parois s'étendant perpendiculairement à la surface supérieure du substrat de base,
**caractérisé en ce que** les parois (1) incorporent des colorants (C) avec une répartition desdits colorants à l'intérieur des parois correspondant à un profil de diffusion à partir d'une surface des dites parois, et **en ce que** la couche transparente (2) est dépourvue de colorants.

13. Composant selon la revendication 12, dans lequel le matériau de la couche transparente (2) possède une température de gel ou de ramollissement supérieure à une température de gel ou de ramollissement du matériau des parois (1).

14. Composant selon la revendication 12 ou 13, dans lequel les parois (1) sont constituées d'un matériau de nature organique ou hybride organo-minérale, et le matériau de la couche transparente (2) est de nature minérale ou hybride organo-minérale.

15. Composant selon la revendication 14, dans lequel le matériau de la couche transparente (2) comprend de la silice, de l'oxyde de zinc, un oxyde d'indium dopé à l'étain, ou un matériau hybride incorporant de la silice, de l'oxyde de zinc ou un oxyde d'indium dopé à l'étain.

16. Composant selon l'une quelconque des revendications 12 à 15, dans lequel le matériau des parois (1) comprend une résine, notamment une résine lithographique.

17. Composant selon l'une quelconque des revendications 12 à 16, formant une partie au moins d'un verre de lunettes (100), d'un verre de masque, d'une lentille optique, d'une visière de casque, d'un hublot d'avion ou d'un vitrage, ou formant une partie au moins d'une structure multicouche adaptée pour être appliquée sur un verre de lunettes, un verre de masque, une lentille optique, une visière de casque, un hublot d'avion ou un vitrage.

## Patentansprüche

1. Verfahren zum selektiven Färben, umfassend die folgenden Schritte:
/1/ Bereitstellen eines Substrats (10) mit einer freiliegenden Fläche (S), wobei die freiliegende Fläche einen ersten Flächenabschnitt (S₁), der aus einem ersten Material besteht, und einen zweiten Flächenabschnitt (S₂), der aus einem zweiten Material besteht, das von dem ersten Material verschieden ist, umfasst;
/2/ Bereitstellen einer Quelle von Färbemitteln, die eingerichtet ist, die Färbemittel (C) freizusetzen, wenn die Quelle erhitzt wird;
/3/ Erhitzen der Quelle von Färbemitteln in der Nähe der freiliegenden Fläche (S) des Substrats derart, dass die Färbemittel (C) von der Quelle von Färbemitteln auf die freiliegende Fläche des Substrats transferiert werden;
/4/ Erhitzen des Substrats (10) derart, dass die Färbemittel (C), die auf den ersten Flächenabschnitt (S₁) transferiert wurden, in das Innere des ersten Materials eindringen; und
/5/ Spülen der freiliegenden Fläche (S) des Substrats mit einem Lösungsmittel von Färbemitteln, um Färbemittel zu eliminieren, die auf der freiliegenden Fläche zurückgeblieben sind;
wobei das zweite Material ausgewählt wird, damit die Färbemittel, die von der Quelle von Färbemitteln stammen und auf dem zweiten Flächenabschnitt (S₂) am Beginn von Schritt /4/ vorhanden sind, nicht in das Innere des zweiten Materials während des Schritts /4/ eindringen und in Schritt /5/ eliminiert werden.

2. Verfahren nach Anspruch 1, wobei das zweite Material eine Gel- oder Erweichungstemperatur besitzt, die größer ist als eine Gel- oder Erweichungstemperatur des ersten Materials.

3. Verfahren nach Anspruch 1 oder 2, wobei das erste Material organischer oder hybrider organomineralischer Beschaffenheit ist, und das zweite Material mineralischer oder hybrider organomineralischer Beschaffenheit ist.

4. Verfahren nach Anspruch 3, wobei das zweite Material Siliciumdioxid, Zinkoxid, ein Indiumoxid, dotiert mit Zinn, oder ein hybrides Material, umfassend Siliciumdioxid, Zinkoxid oder ein Indiumoxid, dotiert mit Zinn, umfasst.

5. Verfahren nach einem der Ansprüche 1 bis 4, wobei die Quelle von Färbemitteln eingerichtet ist, die Färbemittel in Schritt /3/ durch Sublimation der Färbemittel freizusetzen, und damit die Färbemittel (C) beim Transfer zwischen der Quelle von Färbemitteln und der freiliegenden Fläche (S) des Substrats in Gasform sind.

6. Verfahren nach einem der Ansprüche 1 bis 4, wobei die Quelle von Färbemitteln eingerichtet ist, damit die Färbemittel (C) bei einem Kontakt zwischen der Quelle von Färbemitteln und der freiliegenden Fläche (S) des Substrats transferiert werden, der während des Schritts /3/ hergestellt wird, und wobei die Quelle von Färbemitteln zwischen den Schritten /3/ und /4/ zurückgezogen wird.

7. Verfahren nach einem der vorhergehenden Ansprüche, wobei die Quelle von Färbemitteln einen Abschnitt aus Papier oder Polyvinylalkohol, imprägniert mit den Färbemitteln (C), umfasst.

8. Verfahren nach einem der vorhergehenden Ansprüche, wobei das Substrat (10) umfasst:
- ein transparentes Basissubstrat (3) mit einer oberen Fläche;
- eine transparente Schicht (2) des zweiten Materials, die von der oberen Fläche des Basissubstrats getragen wird; und
- ein Netz von Wänden (1), das auf der transparenten Schicht des zweiten Materials, auf einer Seite der Schicht gegenüber dem Basissubstrat, angeordnet ist, wobei sich die Wände senkrecht zur oberen Fläche des Basissubstrats erstrecken,
wobei der erste Abschnitt (S₁) der freiliegenden Fläche aus Wänden (1) besteht, und der zweite Abschnitt (S₂) der freiliegenden Fläche aus der transparenten Schicht (2) des zweiten Materials zwischen den Wänden besteht.

9. Verfahren nach Anspruch 8, wobei die Wände (1) mindestens teilweise aus Harz, insbesondere aus lithographischem Harz, bestehen, und wobei das Substrat (10) in Schritt /4/ während mindestens einer Stunde auf eine Temperatur zwischen 110 °C und 150 °C erhitzt wird.

10. Verfahren nach Anspruch 8 oder 9, wobei das Basissubstrat (3) aus Polyethylenterephthalat besteht.

11. Verfahren nach einem der Ansprüche 8 bis 10, wobei die transparente Schicht (2) des zweiten Materials eine Dicke zwischen 50 und 1000 nm, bevorzugt zwischen 100 und 500 nm, senkrecht zur oberen Fläche des Basissubstrats (3) gemessen, besitzt.

12. Transparente Zellkomponente, welche ein deutliches Sehen durch die Komponente gestattet und umfasst:
- ein transparentes Basissubstrat (3) mit einer oberen Fläche;
- eine transparente Schicht (2), die von der oberen Fläche des Basissubstrats getragen wird; und
- ein Netz von Wänden (1), das auf der transparenten Schicht, auf einer Seite der Schicht gegenüber dem Basissubstrat, angeordnet ist, wobei sich die Wände senkrecht zur oberen Fläche des Basissubstrats erstrecken,
**dadurch gekennzeichnet, dass** die Wände (1) Färbemittel (C) mit einer Verteilung der Färbemittel im Inneren der Wände enthalten, die einem Diffusionsprofil von einer Fläche der Wände entspricht, und dadurch, dass die transparente Schicht (2) frei von Färbemitteln ist.

13. Komponente nach Anspruch 12, wobei das Material der transparenten Schicht (2) eine Gel- oder Erweichungstemperatur besitzt, die größer ist als eine Gel- oder Erweichungstemperatur des Materials der Wände (1).

14. Komponente nach Anspruch 12 oder 13, wobei die Wände (1) aus einem Material organischer oder hybrider organomineralischer Beschaffenheit bestehen, und das Material der transparenten Schicht (2) mineralischer oder hybrider organomineralischer Beschaffenheit ist.

15. Komponente nach Anspruch 14, wobei das Material der transparenten Schicht (2) Siliciumdioxid, Zinkoxid, ein Indiumoxid, dotiert mit Zinn, oder ein hybrides Material, umfassend Siliciumdioxid, Zinkoxid oder ein Indiumoxid, dotiert mit Zinn, umfasst.

16. Komponente nach einem der Ansprüche 12 bis 15, wobei das Material der Wände (1) ein Harz, insbesondere ein lithographisches Harz, umfasst.

17. Komponente nach einem der Ansprüche 12 bis 16, welche einen Teil mindestens eines Brillenglases (100), eines Maskenglases, einer optischen Linse, eines Helmvisiers, eines Flugzeugfensters oder einer Verglasung bildet, oder einen Teil mindestens einer mehrschichtigen Struktur bildet, die eingerichtet ist, auf einem Brillenglas, einem Maskenglas, einer optischen Linse, einem Helmvisier, einem Flugzeugfenster oder einer Verglasung aufgebracht zu werden.

## Claims

1. Selective colouring process comprising the following steps:
/1/ providing a substrate (10) having an uncovered surface (S), said uncovered surface comprising a first surface portion (S₁) formed from a first material and a second surface portion (S₂) formed from a second material different from said first material;
/2/ providing a source of colourants that is suitable for releasing the colourants (C) when said source is heated;
/3/ heating the source of colourants close to the uncovered surface (S) of the substrate, so that colourants (C) are transferred from said source of colourants onto said uncovered surface of the substrate;
/4/ heating the substrate (10) so that colourants (C) that have been transferred onto the first surface portion (S₁) penetrate into the first material; and
/5/ rinsing the uncovered surface (S) of the substrate with a solvent for the colourants, so as to remove the colourants remaining on said uncovered surface,
in which the second material is selected so that colourants originating from the source of colourants and present on the second surface portion (S₂) at the start of step /4/ do not penetrate into said second material during said step /4/, and are removed in step /5/.

2. Process according to Claim 1, in which the second material has a freezing point or softening point higher than a freezing point or softening point of the first material.

3. Process according to Claim 1 or 2, in which the first material is of organic or organo-mineral hybrid nature, and the second material is of mineral or organic-mineral hybrid nature.

4. Process according to Claim 3, in which the second material comprises silica, zinc oxide, an indium tin oxide, or a hybrid material incorporating silica, zinc oxide or an indium tin oxide.

5. Process according to any one of Claims 1 to 4, in which the source of colourants is suitable for releasing said colourants in step /3/ by sublimation of said colourants, and said colourants (C) are in gaseous form during the transfer between said source of colourants and the uncovered surface (S) of the substrate.

6. Process according to any one of Claims 1 to 4, in which the source of colourants is suitable so that said colourants (C) are transferred during contact between said source of colourants and the uncovered surface (S) of the substrate, performed during step /3/, and in which the source of colourants is removed between steps /3/ and /4/.

7. Process according to any one of the preceding claims, in which the source of colourants comprises a portion of paper or of polyvinyl alcohol, impregnated with the colourants (C).

8. Process according to any one of the preceding claims, in which the substrate (10) comprises:
- a transparent base substrate (3) having an upper surface;
- a transparent layer (2) of the second material borne by the upper surface of the base substrate; and
- a network of walls (1) arranged on the transparent layer of the second material, on a side of said layer opposite the base substrate, the walls extending perpendicular to the upper surface of the base substrate,
the first portion of uncovered surface (S₁) consisting of the walls (1), and the second portion of uncovered surface (S₂) consisting of the transparent layer (2) of the second material between the walls.

9. Process according to Claim 8, in which the walls (1) are at least partly made of resin, especially of lithographic resin, and in which the substrate (10) is heated in step /4/ for at least one hour at a temperature of between 110° and 150°C.

10. Process according to Claim 8 or 9, in which the base substrate (3) is made of polyethylene terephthalate.

11. Process according to any one of Claims 8 to 10, in which the transparent layer (2) of the second material has a thickness of between 50 and 1000 nm, preferably between 100 and 500 nm, measured perpendicular to the upper surface of the base substrate (3).

12. Transparent cellular component allowing a clear view through said component and comprising:
- a transparent base substrate (3) having an upper surface;
- a transparent layer (2) borne by the upper surface of the base substrate; and
- a network of walls (1) arranged on the transparent layer, on a side of said layer opposite the base substrate, the walls extending perpendicular to the upper surface of the base substrate,
**characterized in that** the walls (1) incorporate colourants (C) with a distribution of said colourants inside the walls corresponding to a profile of diffusion from a surface of said walls, and **in that** the transparent layer (2) is free of colourants.

13. Component according to Claim 12, in which the material of the transparent layer (2) has a freezing point or softening point above a freezing point or softening point of the material of the walls (1).

14. Component according to Claim 12 or 13, in which the walls (1) are formed from a material of organic or organo-mineral hybrid nature, and the material of the transparent layer (2) is of mineral or organic-mineral hybrid nature.

15. Component according to Claim 14, in which the material of the transparent layer (2) comprises silica, zinc oxide, an indium tin oxide, or a hybrid material incorporating silica, zinc oxide or an indium tin oxide.

16. Component according to any one of Claims 12 to 15, in which the material of the walls (1) comprises a resin, especially a lithographic resin.

17. Component according to any one of Claims 12 to 16, forming at least part of a spectacle lens (100), of a mask lens, of an optical lens, of a helmet visor, of an aircraft window or of glazing, or forming at least part of a multilayer structure suitable for application to a spectacle lens, a mask lens, an optical lens, a helmet visor, an aircraft window or glazing.
